# EUROPÄISCHE PATENTSCHRIFT

(11) **EP 1 936 347 B1**
(45) Veröffentlichungstag und Bekanntmachung des Hinweises auf die Patenterteilung: **08.02.2012**
(21) Anmeldenummer: 07122946.2
(22) Anmeldetag: 11.12.2007
(51) Int. Cl.: G01M 1/04, G01M 1/24

(54) **Vorrichtung zur Lagerung von Rotoren, insbesondere Gelenkwellen, in einer Auswuchtmaschine**
Device for supporting rotors, in particular cardan shafts, in a balancing machine
Dispositif de support de rotors, en particulier d'arbres à cardan, dans une machine d'équilibrage

(30) Priorität: 18.12.2006 DE 102006060200
(43) Veröffentlichungstag der Anmeldung: 25.06.2008
(73) Patentinhaber: Schenck RoTec GmbH, 64293 Darmstadt (DE)
(72) Erfinder: Rogalla, Martin, 64297, Darmstadt (DE); Thelen, Dieter, Dr., 64397, Modautal (DE)
(74) Vertreter: Haar, Lucas Heinz Jörn

(56) Entgegenhaltungen:
- EP-A- 0 410 331
- DE-A1- 3 716 210
- DE-A1-102005 023 086
- GB-A- 1 276 341
- GB-A- 1 535 108
- US-A- 3 079 801
- US-A- 4 449 407
- US-A- 5 600 062

## Beschreibung

Die Erfindung betrifft eine Gelenkwellenlagerung in einer Auswuchtmaschine mit einem Lagerständer und einem an dem Lagerständer mittels Federstäben schwingfähig gelagerten Ständeroberteil, das eine drehbar gelagerte, horizontal ausgerichtete Spindel mit einem Spannfutter zum Einspannen eines Gelenkwellenendes und einen Motor zum drehenden Antreiben der Spindel aufweist.

Bei einer aus DE 37 16 210 A1 bekannten Vorrichtung der eingangs genannten Art sind die Federstäbe in zur Rotorachse senkrechten Ebenen angeordnet. Der Rotor kann hierbei in einer zu den Federstäben senkrechten Ebene schwingen und dabei auch Nickschwingungen ausführen.

Gelenkwellen werden zum Auswuchten üblicherweise in horizontaler Lage mit Ihren Enden an zwei drehbaren Spindeln befestigt. Die Unwucht wird bei vergleichsweise hohen Drehzahlen, üblicherweise bis zur Betriebsdrehzahl, vermessen. Die Messdrehzahlen werden vorgegeben und richten sich nach den späteren Einbauverhältnissen, weil sich der Unwuchtzustand von Gelenkwellen in Abhängigkeit von der Drehzahl ändern kann. Eine Ursache hierfür sind Spiel und Reibung in den Gelenken und gegebenenfalls in einem Schiebestück und Biegung des Gelenkwellenrohrs.

Zum möglichst betriebsnahen Auswuchten von Gelenkwellen sind automatische Gelenkwellenauswuchtmaschinen gefordert, bei denen die mitschwingenden Massen und die Steifigkeit der Abstützung der Lagerspindel betriebsähnliche Bedingungen darstellen. Auf eine besonders leichte Ausführung der mitschwingenden Massen wird bewusst verzichtet. Durch eine solche, im Wesentlichen isotrope- und massebedingt harte Ausbildung des Lagerständeroberteils werden die dynamischen Eigenschaften von Motorblock und Differenzialgetriebe, zu deren Kupplung die Gelenkwelle bestimmt ist, nachgebildet, um die Gelenkwelle möglichst betriebsnah zu wuchten. Die Federabstützung des schwingenden Lagerständeroberteils ist daher auch so bemessen, dass die Drehzahl zum Vermessen der Unwucht oberhalb der Eigenfrequenzen des Lagerständers liegt und somit die Maschine im "überkritischen" Bereich betrieben werden kann.

Das Federsystem, welches bei einer aus US-B-6 694 812 bekannten Gelenkwellenauswuchtmaschine der angegebenen Art den schwingungsfähigen Ständeroberteil abstützt, besteht aus Blattfedern. Diese können sich jedoch unter Belastung verwinden oder ausbeulen. Hierdurch entstehen höhere Eigenfrequenzen des Lagerständers, welche oberhalb der Messdrehzahl liegen. Die erste Eigenform dieser höheren Eigenfrequenzen ist durch eine Nickschwingung der Lagerständerobertelle gekennzeichnet und die entsprechende Eigenfrequenz wird als Kippresonanz bezeichnet. Kommt man mit der Auswuchtdrehzahl in die Nähe dieser Kippresonanz, dann kann die Unwucht nicht mehr genau erfasst werden. Noch gravierender ist, dass durch die Resonanzüberhöhung in der Maschinenstruktur große Spannungen entstehen. Dies kann zum Versagen von Bauteilen führen und die Maschine sowie Personen gefährden. Die mögliche Drehzahl zur Unwuchtmessung wird daher nach oben durch die Kippresonanz begrenzt. Diese kann bedingt durch die Masse der Spannaufnahme für die Gelenkwelle am Oberteil des Lagerständers sowie auch durch die Masse der Gelenkwelle so weit absinken, dass man die Auswuchtmaschine nicht mehr mit der geforderten Messdrehzahl betreiben kann.

Aus EP-A-0 410 331-A2 sind verschiedene Ausführungen von dynamischen Auswuchtmaschinen bekannt, die Drehschwingungen nutzen. Die hierin beschriebenen Maschinen mit horizontaler Lagerung des auszuwuchtenden Rotors haben Lagerständer, bei denen die schwingfähige Lagerung an quer zur Rotationsachse ausgerichteten Blattfedern oder Druckfedern abgestützt ist. Die Unwuchtmessung beeinträchtigende Kippresonanzen lassen sich mit diesen Gestaltungen von Lagerständern nicht vermeiden. Andere Maschinenausführungen haben Lagerständer mit vertikal ausgerichteter und durch einen Motor angetriebenen Spindel, die in einem an Blattfedern oder Druckfedern abgestützten Schwingrahmen gelagert ist, der in horizontaler Richtung schwingen kann. Für das Auswuchten von Gelenkwellen sind diese Ausführungen nicht geeignet.

Es ist weiterhin aus US-A-4 449 407 eine Antriebswellenlagerungsanordnung für dynamische Radauswuchtmaschinen bekannt, die ein längliches Lagergehäuse mit darin im Abstand voneinander angeordneten Lagerblöcken aufweist, in denen eine Antriebswelle drehbar gelagert ist. Jeder Lagerblock ist über ein Distanzstück in einer Auswuchtebene schwenkbar an dem Lagergehäuse gehalten und in einem Abstand von dem Distanzstück über einen Kraftsensor an dem Lagergehäuse abgestützt. Eine Anordnung von zur Antriebswelle paralleler Federstäbe verbindet die Lagerblöcke miteinander. Die Federstäbe sind so ausgelegt, dass die Lagerblöcke sich in ihren Auswuchtebenen bewegen können und axiale Bewegung der lagerblöcke zueinander unterbunden werden.

Der Erfindung liegt daher die Aufgabe zugrunde, eine Gelenkwellenlagerung in einer Auswuchtmaschine der eingangs genannten Art zur schwingfähigen Lagerung von Gelenkwellen zu schaffen, welche einen großen resonanzfreien Messdrehzahlbereich ermöglicht. Die Gelenkwellenlagerung soll möglichst kleine Eigenfrequenzen für die ersten Eigenformen haben. um überkritische Unwuchtmessungen durchführen zu können, und möglichst große Eigenfrequenzen für die höheren Eigenformen aufweisen. Weiterhin ist es Aufgabe der Erfindung, die federnde Abstützung des Ständeroberteils so zu gestalten, dass sie in horizontaler und vertikaler Richtung annähernd gleiche Steifigkeit besitzt.

Diese Aufgabe wird nach der Erfindung durch die in Patentanspruch 1 angegebenen Merkmale gelöst. Vorteilhafte Ausgestaltungen der Erfindung sind in den weiteren Ansprüchen angegeben.

Nach der Erfindung ist das Ständeroberteil nur mittels Federstäben an dem Lagerständer schwingfähig abgestützt, wobei in zwei parallelen, vertikalen Ebenen, die gleiche Abstände von der Drehachse der Spindel haben, jeweils wenigstens zwei im Abstand voneinander angeordnete Gruppen von Federstäben angeordnet sind, wobei in jeder Ebene die Federstäbe der Gruppen in gleicher Zahl vorliegen und parallel zur Drehachse der Spindel ausgerichtet sind und wobei die Federstäbe der Gruppen eine derart langgestreckte, schlanke Form haben, dass ihre Steifigkeit in axialer Richtung wenigstens 100-mal, insbesondere wenigstens 300 mal, größer ist als ihre radiale Biegesteifigkeit. Besonders vorteilhaft ist es, wenn Steifigkeit der Federstäbe in axialer Richtung wenigstens 500-mal größer ist als ihre radiale Biegesteifigkeit.

Bei der erfindungsgemäßen Gestaltung werden die Federstäbe bei einer Bewegung des Ständeroberteils in einer zur Drehachse des Rotorlagers radialen Richtung auf Biegung beansprucht, wobei die Steifigkeit der Federstäbe so auszulegen ist, dass die untere Eigenfrequenz des Ständeroberteils unter der gewünschten Messdrehzahl liegt und somit die Unwuchtmessung im überkritischen Bereich erfolgen kann. Bei Kippbewegungen des Ständeroberteils werden hingegen die Federstäbe auf Zug oder Druck belastet, wobei ihre Steifigkeit bedingt durch die lang gestreckte schlanke Form wenigstens um den Faktor 100 größer ist. Dies hat zur Folge, dass die Kippresonanz des Ständeroberteils auf das 2,5 bis 3-Fache der unteren Eigenfrequenz erhöht wird, so dass ein großer resonanzfreier Frequenzbereich gebildet wird, der für Unwuchtmessungen genutzt werden kann. Die erfindungsgemäße Gestaltung hat weiterhin den Vorteil, dass die federnde Abstützung weitgehend isotrop ist und in allen radialen Richtungen, bezogen auf die Drehachse des Rotorlagers gleiche Steifigkeit hat. Die Erfindung ermöglicht weiterhin eine sehr einfache und kostengünstige Gestaltung der Vorrichtung.

Nach einem weiteren Vorschlag der Erfindung kann vorgesehen sein, dass in zwei parallelen Ebenen, die gleiche Abstände von der Drehachse des Rotorlagers haben, jeweils wenigstens zwei Federstäbe parallel zur Drehachse angeordnet sind, wobei die Federstäbe der einen Ebene symmetrisch zu denen der anderen Ebene angeordnet sind. Um die Tragfähigkeit der Federabstützung unter Beibehaltung der Steifigkeitsunterschiede zu erhöhen, können nach einem weiteren Vorschlag der Erfindung in den beiden zur Drehachse des Rotorlagers parallelen Ebenen jeweils zwei im Abstand voneinander angeordnete Gruppen von Federstäben vorgesehen sein, die aus mehreren, zur Drehachse parallelen Federstäben bestehen. Die einzelnen Gruppen von Federstäben können hierbei Bestandteil eines einteiligen Bleches sein, wobei die einzelnen Federstäbe durch das Blech durchdringende parallele Schlitze gebildet und an ihren Enden durch ungeschlitzte Abschnitte des Bleches miteinander verbunden sind. Diese Gestaltung ermöglicht eine kostengünstige Herstellung und eine einfache Montage der Federstabgruppen.

Die erfindungsgemäße Federstabanordnung ist auch relativ nachgiebig für Drehmomente um die Drehachse des Rotorlagers. Erweist sich diese Nachgiebigkeit als störend, so kann nach einem weiteren Vorschlag der Erfindung eine Drehmomentstütze vorgesehen sein, welche das Ständeroberteil mit dem Lagerständer verbindet und eine niedrige Steifigkeit in allen radialen Richtungen bezogen auf die Drehachse, hingegen eine hohe Steifigkeit bei Belastung durch Verdrehung des Ständeroberteils hat. Vorzugsweise weist diese Drehmomentstütze zwei erste parallele Federstäbe auf, die mit einem Ende an dem Ständeroberteil und mit dem anderen Ende an einem biegesteifen Mittelstück befestigt sind, sowie zwei parallele zweite Federstäbe, die quer zur Längsrichtung der ersten Federstäbe sich erstrecken und mit einem Ende an dem Verbindungsstück und mit dem anderen Ende an dem Lagerständer befestigt sind. Die ersten und zweiten Federstäbe und das Verbindungsstück können vorteilhaft einstückig aus einem Blech ausgeschnitten sein.

Nach der Erfindung kann weiterhin vorgesehen sein, dass das Ständeroberteil eine drehbar gelagerte Spindel mit einem Spannfutter zum Einspannen eines Rotorendes und einen Motor zum drehenden Antreiben der Lagerspindel aufweist. Diese Gestaltung verleiht dem schwingfähigen Ständeroberteil eine größere Masse, durch welche die dynamischen Eigenschaften der Einbauverhältnisse nachgebildet werden, für die die auszuwuchtenden Gelenkwellen bestimmt sind. Hierdurch wird bei der Unwuchtmessung eine größere Nähe zu den späteren Betriebsverhältnissen der Gelenkwellen erzielt.

Die Erfindung wird nachfolgend anhand von Ausführungsbeispielen näher erläutert, die in der Zeichnung dargestellt sind. Es zeigen
- Figur 1: eine schematische Darstellung einer Gelenkwellenlagerung,
- Figur 2: ein Diagramm des Amplitudenverlaufs des Schwingweges über der Drehzahl eines Lagerständeroberteils nach der Erfindung,
- Figur 3: eine Ansicht eines Lagerständers für eine Gelenkwellenauswucht- maschine mit einem an vier Gruppen von Federstäben abgestützten Ständeroberteil,
- Figur 4: ein Lagerständer einer Gelenkwellenauswuchtmaschine mit zusätzlicher Drehmomentabstützung.

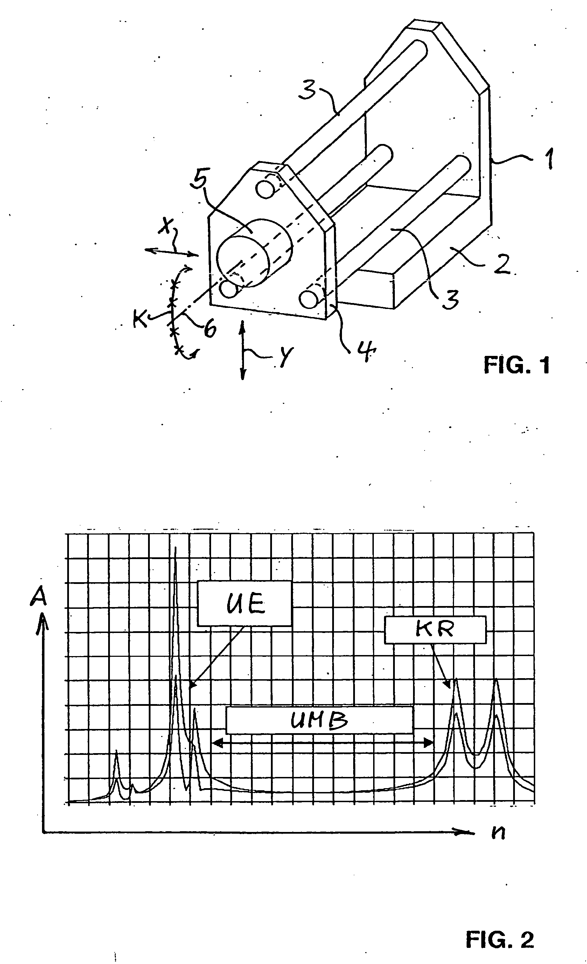

Die in Figur 1 gezeigte Gelenkwellenlagerung umfasst eine Lagerständer 1, der mit einem Fuß 2 standfest, beispielsweise auf einem Maschinenbett, befestigbar ist. An dem Lagerständer 1 sind drei parallele Federstäbe 3 in einem Abstand voneinander befestigt, die sich parallel zur Aufstandsebene des Fußes 2 und damit horizontal erstrecken. In Bezug auf eine vertikale Mittelebene des Lagerständers 1 sind die Federstäbe 3 symmetrisch angeordnet. Die Federstäbe 3 sind gleich lang. An ihren freien Enden ist ein Ständeroberteil 4 befestigt, das in seinem Zentrum ein Rotorlager 5 zur drehbaren Lagerung eines Rotors aufweist. Die Drehachse 6 des Rotorlagers 5 verläuft in der Mittelebene des Lagerständers 1 parallel zu den Federstäben 3.

Bei der in Figur 1 gezeigten Vorrichtung führt eine beispielsweise durch die Unwucht eines im Rotorlager 5 gelagerten, umlaufenden Rotors hervorgerufene Belastung in X-und Y-Richtung zu einer Beanspruchung der Federstäbe 3 auf Biegung. Da das Biegewiderstandsmoment der Federstäbe 3 aufgrund ihrer schlanken und langgestreckten Form relativ klein ist, ist auch die Steifigkeit der Abstützung relativ klein; die Abstützung ist weich und hat eine kleine Eigenfrequenz des Ständeroberteils 4 für die ersten Eigenformen zur Folge.

Bei Nick- oder Kippschwingungen, angedeutet durch den Pfeil K, werden die Federstäbe 3 auf Zug und Druck belastet. Bei dieser Belastung ist die Steifigkeit der Federstäbe 3 um ein Vielfaches höher und führt zu einer vergleichsweise harten Abstützung des Ständeroberteils 4. Die Härte dieser Abstützung wird hierbei nicht allein durch die Zug- und Drucksteifigkeit der Federstäbe 3 bestimmt, sondern zusätzlich auch durch ihren Abstand, da mit wachsendem Abstand die aus den schwingungsinduzierten Kippmomenten resultierenden Kräfte an den Federstäben 3 abnehmen. Die Erfindung beruht nun auf der Erkenntnis, dass vor allem durch eine besonders schlanke Formgestalt der Federstäbe und einen genügend großen Abstand zwischen den Federstäben die Steifigkeit der Abstützung des Ständeroberteils 4 bei der Belastung durch Kippmomente im Vergleich zur Steifigkeit der Abstützung in radialer Richtung in einem solchen Maße erhöht werden kann, dass die Eigenfrequenzen des Ständeroberteils 4 für die höheren Eigenformen das Drei- bis Vierfache der Eigenfrequenz für die ersten Eigenformen beträgt, so dass zwischen den unteren Eigenfrequenzen der ersten Eigenformen und der nächsthöheren Kippresonanz ein breiter, resonanzfreier Drehzahlbereich entsteht, der für überkritische Unwuchtmessungen genutzt werden kann.

An dem in Figur 2 gezeigten Diagramm wird dies verdeutlicht. Aufgetragen sind hier als Ordinate der Amplitudenverlauf A des Schwingweges eines Ständeroberteils einer Vorrichtung nach der Erfindung über der Drehzahl n. Die Amplitudenausschläge UE kennzeichnen die untere Eigenfrequenz, die bei einer verhältnismäßig niedrigen Drehzahl auftritt. Es folgt dann mit zunehmender Drehzahl ein breiter, resonanzfreier Drehzahlbereich UMB, in dem Unwuchtmessungen durchgeführt werden können. Nach oben wird dieser Bereich durch die Kippresonanz KR begrenzt, die aus der Eigenfrequenz des Ständeroberteils für die höhere Eigenformen resultiert.

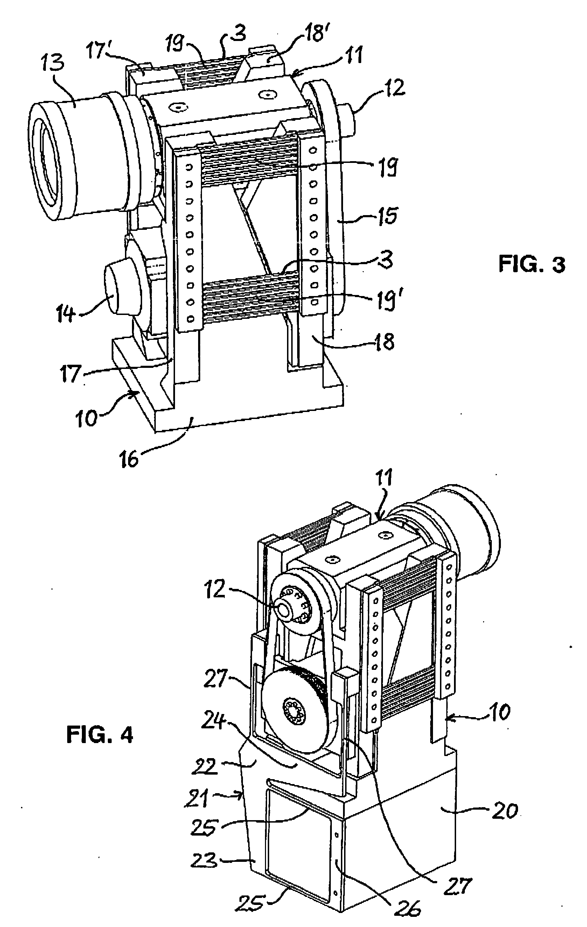

Figur 3 zeigt einen Lagerständer 10, der Teil einer Auswuchtmaschine mit zwei gegenüberliegenden Spindeln zur Lagerung von Gelenkwellen ist. Der Lagerständer 10 hat ein schwingfähiges Ständeroberteil 11, in dem eine Spindel 12 mit einem Futter 13 zum Einspannen eines Gelenkwellenendes angeordnet ist. An dem Ständeroberteil 11 ist ferner ein elektrischer Motor 14 befestigt. Der Motor 14 ist unter der Spindel 12 angeordnet und durch ein Riemengetriebe 15 mit der Spindel 12 gekuppelt.

Der Lagerständer 10 hat einen plattenförmigen Fuß 16, von dem zwei parallele Ständerarme 17, 17' hochstehen. In den Zwischenraum zwischen den Armen 17, 17' ragen das Gehäuse der Spindel 12 und der Motor 14 hinein. Den Armen 17, 17' benachbart sind zwei Arme 18, 18', die an dem Ständeroberteil 11 ausgebildet sind und sich vom Gehäuse der Spindel 12 bis in die Nähe des Fußes 16 erstrecken.

Zur federnd nachgiebigen Verbindung des Ständeroberteils 11 mit dem Lagerständer 10 sind vier Gruppen von Federstäben vorgesehen, die jeweils aus mehreren parallelen Federstäben 3 bestehen. Die untereinander baugleichen Federstabgruppen 19, 19' sind in zwei zur Spindelachse parallelen, vertikalen Ebenen angeordnet und an in den Ebenen liegenden Außenflächen der benachbarten Arme 17, 18 bzw. 17', 18' derart befestigt, dass die Federstäbe 3 sich in horizontaler Richtung parallel zur Achse der Spindel 12 erstrecken. Zwei Federstabgruppen 19 verbinden die oberen Enden der Arme 17, 17' mit den Armen 18, 18'. Die beiden anderen Federstabgruppen 19' verbinden die unteren Enden der Arme 18, 18' mit den Armen 17, 17'.

Die Federstabgruppen 19, 19' bestehen vorzugsweise aus einem rechteckigen Blech aus Federstahl, das durch mehrere parallele Längsschlitze in einzelne Federstäbe 3 unterteilt ist, die an den Enden durch Randabschnitte des Bleches miteinander verbunden sind. Die einzelnen Federstäbe 3 der Federstabgruppen 19, 19' haben eine langgestreckte schlanke Form mit einem Verhältnis von Durchmesser d zur Länge I von ungefähr 1:15. Hieraus errechnet sich ein Verhältnis von radialer Biegesteifigkeit Cᵣ der Federstäbe zu axialer Steifigkeit Cₐ bei Belastung durch Zug und Druck von 1:300. Das Steifigkeitsverhältnis Cᵣ/Cₐ ist allein durch die Formgestalt der einzelnen Federstäbe bestimmt und von der Zahl der Federstäbe unabhängig. Durch die Wahl der Anzahl der Federstäbe 3 der Federstabgruppen 19, 19' kann daher die Abstützung des Ständeroberteils 11 den aufzunehmenden Belastungen angepasst werden, ohne dass sich dadurch das durch die Federstabform bestimmte Steiflgkeitsverhältnis Cᵣ/Cₐ ändert.

Durch die bei dem beschriebenen Ausführungsbeispiel um das Dreihundertfache höhere Steifigkeit in axialer Richtung der Federstabgruppen 19, 19' und durch den Abstand, den die Federstabgruppen 19, 19' in horizontaler und vertikaler Richtung voneinander haben, wird eine sehr steife Abstützung des Ständeroberteils 11 gegen Nick- oder Kippschwingungen bei gleichzeitig großer Nachgiebigkeit des Ständeroberteils 11 in vertikaler und horizontaler Richtung erreicht. Dies ermöglicht eine niedrige untere Eigenfrequenz des Ständeroberteils und einen großen Frequenzabstand zur Kippresonanz und den oberen Eigenfrequenzen.

Die Steifigkeit der Federstabgruppen 19, 19' ist auch bei Belastung durch Drehmomente um die Achse der Spindel 12 relativ klein. Will man Verdrehungen des Ständeroberteils weitgehend verhindern, so kann dies mit einer Drehmomentstütze bewirkt werden. Eine Ausführungsform einer solchen Drehmomentstütze ist in Figur 4 gezeigt.

In Figur 4 ist die in Figur 3 gezeigte Vorrichtung mit ihrem Lagerständer 10 auf einem quaderförmigen Sockel 20 befestigt. Der Sockel 20 ist außerdem durch eine Drehmomentstütze 21 mit dem Ständeroberteil 11 verbunden. Die Drehmomentstütze 21 besteht aus einem biegesteifen Mittelstück 22, das zwei rechtwinklig zueinander angeordnete Arme 23, 24 hat. Von dem einen, vertikal ausgerichteten Arm 23 erstrecken sich zwei im Abstand voneinander angeordnete parallele Federstäbe 25 in horizontaler Richtung. Die Enden der Federstäbe 25 sind mit Hilfe eines sie verbindenden Steges 26 an dem Sockel 20 befestigt. Hierdurch ist das Mittelstück 22 drehsteif aber vertikal bewegbar an dem Sockel 20 gehalten. Der andere, horizontale Arm 24 ist durch zwei im Abstand voneinander angeordnete, parallele Federstäbe 27, die vertikal ausgerichtet sind, mit den Armen 18 und 18' des Ständeroberteils 11 verbunden. Die Federstäbe 27 ermöglichen eine horizontale Relativbewegung zwischen dem Ständeroberteil 11 und dem Mittelstück 22.

Durch die beschriebene Gestaltung der Drehmomentstütze 21 bleibt die federnde Nachgiebigkeit des Ständeroberteils in horizontaler und vertikaler Richtung uneingeschränkt erhalten. Der zusätzliche Federwiderstand der Federstäbe 25 und 27 kann bei der Auslegung der Federstabgruppen 19, 19' berücksichtigt werden. Auf das Ständeroberteil 11 einwirkende Drehmomente führen jedoch zu einer Zug- oder Druckbelastung der Federstäbe 25, 27. Bei einer solchen Belastung sind die Federstäbe 25, 27 sehr steif, so dass das Ständeroberteil 11 keine nennenswerten Drehbewegungen um die Spindelachse ausführen kann.

## Patentansprüche

1. Gelenkwellenlagerung für eine Auswuchtmaschine mit einem Lagerständer (10) und einem an dem Lagerständer (10) schwingfähig abgestützten Ständeroberteil (11), das eine drehbar gelagerte, horizontal ausgerichtete Spindel (12) mit einem Spannfutter (13) zum Einspannen eines Gelenkwellenendes und einen Motor (14) zum drehenden Antreiben der Spindel (12) aufweist, **dadurch gekennzeichnet, dass** das Ständeroberteil (11) an dem Lagerständer nur mittels Federstäben (3, 25, 27) schwingfähig abgestützt ist, wobei in zwei parallelen, vertikalen Ebenen, die gleiche Abstände von der Drehachse der Spindel (12) haben, jeweils wenigstens zwei im Abstand voneinander angeordnete Gruppen (19, 19') von Federstäben (3) angeordnet sind, wobei in jeder Ebene die Federstäbe (3) der Gruppen (19, 19') in gleicher Zahl vorliegen und parallel zur Drehachse (6) der Spindel (12) ausgerichtet sind und wobei die Federstäbe (3) der Gruppen (19, 19') eine derart langgestreckte, schlanke Form haben, dass ihre Steifigkeit in axialer Richtung wenigstens 100-mal größer ist als ihre radiale Biegesteifigkeit.

2. Vorrichtung nach Anspruch 1, **dadurch gekennzeichnet, dass** die Steifigkeit der Federstäbe (3) der Gruppen (19, 19') in axialer Richtung wenigstens 300 mal größer ist als ihre radiale Biegesteifigkeit.

3. Vorrichtung nach einem der Ansprüche 1 oder 2, **dadurch gekennzeichnet, dass** die einzelnen Gruppen (19, 19') von Federstäben (3) Bestandteil eines einteiligen Bleches sind, wobei die einzelnen Federstäbe (3) durch das Blech durchdringende parallele Schlitze gebildet und an ihren Enden durch ungeschlitzte Abschnitte des Bleches miteinander verbunden sind.

4. Vorrichtung nach einem der vorhergehenden Ansprüche, **dadurch gekennzeichnet, dass** eine Drehmomentstütze (21) aus Federstäben (25, 27) vorgesehen ist, welche das Ständeroberteil (11) mit dem Lagerständer (10) verbindet und dass die Drehmomentstütze (21) eine niedrige Steifigkeit in radialer Richtung bezogen auf die Drehachse, hingegen eine hohe Steifigkeit bei Belastung durch Verdrehung des Ständeroberteils (11) hat.

5. Vorrichtung nach dem vorhergehenden Anspruch, **dadurch gekennzeichnet, dass** die Drehmomentstütze (21) zwei parallele erste Federstäbe (27) aufweist, die mit einem Ende an dem Ständeroberteil (11) und mit dem anderen Ende an einem biegesteifen Mittelstück (22) befestigt sind, sowie zwei parallele zweite Federstäbe (25), die quer zur Längsrichtung der ersten Federstäbe (27) sich erstrecken und mit einem Ende an dem Mittelstück (22) und mit dem anderen Ende an dem Lagerständer (10) befestigt sind.

6. Vorrichtung nach einem der vorhergehenden Ansprüche, **dadurch gekennzeichnet, dass** die ersten und zweiten Federstäbe (27, 25) und das Mittelstück (22) einstückig aus einem Blech ausgeschnitten sind.

## Claims

1. Device for mounting articulated shafts for a balancing machine comprising a bearing frame (10) and a frame upper part (11), which is supported on the bearing frame (10) so as to be able to oscillate and has a rotatably mounted and horizontally aligned spindle (12) with a chuck (13) to secure an end of an articulated shaft and has a motor (14) to rotatably drive the spindle (12), **characterised in that** the frame upper part (11) is supported on the bearing frame (10) so as to be able to oscillate via spring bars (3, 25, 27) only, wherein in each case at least two respective groups (19, 19') of spring bars (3), which are arranged in a distance from each other, are arranged in two parallel vertical planes being arranged at identical distances from the axis of rotation of the spindle (12), wherein in each plane the spring bars (3) of the groups (19, 19') are provided in equal numbers, and wherein the spring bars (3) of the groups (19, 19') have an elongated, slender shape such that their rigidity in the axial direction is at least 100 times greater than their radial flexural rigidity.

2. Device according to claim 1, **characterised in that** the rigidity of the spring bars (3) of the groups (19, 19') in the axial direction is at least 300 times greater than their radial flexural rigidity.

3. Device according to either claim 1 or claim 2, **characterised in that** the individual groups (19, 19') of spring bars (3) are part of a one-piece metal sheet, the individual spring bars (3) being formed by parallel slots penetrating the metal sheet and connected to one another at their ends via unslotted portions of the metal sheet.

4. Device according to any one of the preceding claims, **characterised in that** a torque support (21) of spring bars (25, 27) is provided, which connects the frame upper part (11) to the bearing frame (10), and **in that** the torque support (21) has low rigidity in a radial direction with respect to the axis of rotation, but high rigidity when loaded as a result of twisting of the frame upper part (11).
but high rigidity when loaded as a result of twisting of the frame upper part (11).

5. Device according to the preceding claim, **characterised in that** the torque support (21) includes two parallel first spring bars (27), which are attached to the frame upper part (11) at one end and to a flexurally rigid centre part (22) at the other end, as well as two parallel second spring bars (25), which extend transversely to the longitudinal direction of the first spring bars (27) and are attached to the centre part (22) at one end and to the bearing frame (10) at the other end.

6. Device according to any one of the preceding claims, **characterised in that** the first and second spring bars (27, 25) and the centre part (22) are cut in one piece from a metal sheet.

## Revendications

1. Logement pour arbre de transmission à joint de cardan pour une machine d'équilibrage avec un support de logement (10) et une partie supérieure de support (11) en appui oscillant sur le support de logement (10), laquelle partie supérieure présente une broche (12) logée pivotante et dirigée horizontalement présentant un mandrin de serrage (13) pour l'entraînement en rotation de la broche (12), **caractérisé en ce que** la partie supérieure de support (11) n'est en appui oscillant sur le support de palier que par des baguettes ressorts (3, 25, 27), au moins deux groupes (19, 19') de baguettes ressorts (3) disposés à distance l'un de l'autre étant placés dans chacun de deux plans verticaux parallèles placés à la même distance de l'axe de rotation de la broche (12), les baguettes ressorts (3) des groupes (19, 19') étant présentes dans le même nombre dans chaque plan et étant orientées parallèlement à l'axe de rotation (6) de la broche (12), et les baguettes ressorts (3) des groupes (19, 19') présentant une forme mince et allongée de telle sorte que la rigidité en direction axiale est au moins 100 fois supérieure à leur résistance radiale à la flexion.

2. Dispositif selon la revendication 1, **caractérisé en ce que** la rigidité des baguettes ressorts (3) des groupes (19, 19') en direction axiale est au moins 300 fois supérieure à leur résistance radiale à la flexion.

3. Dispositif selon l'une des revendications 1 ou 2, **caractérisé en ce que** chaque groupe (19, 19') de baguettes ressorts (3) fait partie d'une tôle en une seule pièce, chaque baguette ressort (3) étant formée par des fentes parallèles traversant la tôle et étant reliée aux autres par son extrémité à l'aide de sections de la tôle non fendues.

4. Dispositif selon l'une des revendications précédentes, **caractérisé en ce qu'**il est prévu un appui de moment de rotation (21) en baguettes ressorts (25, 27) qui relie la partie supérieure de support (11) au support de logement (10) et **en ce que** l'appui de moment de rotation (21) présente une plus faible rigidité en direction radiale par rapport à l'axe de rotation, et au contraire une rigidité plus importante en cas de sollicitation par torsion de la partie supérieure de support (11).

5. Dispositif selon la revendication précédente, **caractérisé en ce que** l'appui de moment de rotation (21) présente deux premières baguettes ressorts (27) parallèles qui sont fixées par une extrémité à la partie supérieure de support (11) et par l'autre extrémité à une pièce intermédiaire (22) résistant à la flexion, ainsi que deux deuxièmes baguettes ressorts (25) parallèles qui s'étendent transversalement à la direction longitudinale des premières baguettes ressorts (27) et sont fixées par une extrémité à la pièce intermédiaire (22) et par l'autre extrémité au support de logement (10).

6. Dispositif selon l'une des revendications précédentes, **caractérisé en ce que** les premières et les deuxièmes baguettes ressorts (27, 25) et la pièce intermédiaire (22) sont découpées en une seule pièce dans une tôle.
